# EUROPEAN PATENT APPLICATION

(11) **EP 4 783 290 A1**
(43) Date of publication of application: **29.07.2026**
(21) Application number: 25208527.9
(22) Date of filing: 14.10.2025
(51) Int. Cl.: H01M 10/0583, H01M 10/42

(54) **ELECTRODE AND SECONDARY BATTERY INCLUDING THE SAME**

(30) Priority: 24.01.2025 KR 20250011346
(71) Applicant: SAMSUNG SDI CO., LTD., Yongin-si, Gyeonggi-do 17084 (KR)
(72) Inventor: Jang, Taewoong, Yongin-si, Gyeonggi-do 17084 (KR)
(74) Representative: Meissner Bolte Partnerschaft mbB

(57) **Abstract**

An electrode includes a substrate including a metal material, an active material layer on a portion of the substrate, resulting in an uncoated portion, an electrode tab at an end of the uncoated portion, and a corrugated portion in the uncoated portion between the active material layer and the electrode tab.

## Description

### BACKGROUND

### 1. Field

The present invention relates to an electrode and a secondary battery including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present invention, and therefore, it may contain information that does not constitute related (or prior) art.

### SUMMARY

The present invention concerns an electrode, including a substrate including a metal material, an active material layer on a first portion of the substrate, a second portion of the substrate without the active material being an uncoated portion, an electrode tab at an end of the uncoated portion, and a corrugated portion in the uncoated portion, the corrugated portion being between the active material layer and the electrode tab.

According to one embodiment, an external force is applied to the uncoated portion, the corrugated portion may deform to absorb the external force.

The corrugated portion may include a deformation of the uncoated portion.

The corrugated portion may have a curved shape, at least a portion of the corrugated portion protruding on at least one of two surfaces of the uncoated portion.

The corrugated portion may have a wave shape in which a U shape is repeated throughout the corrugated portion.

The corrugated portion may have a zigzag shape in which a V shape is repeated throughout the corrugated portion.

A height of the corrugated portion may be greater than a thickness of the substrate.

A height of the corrugated portion may be less than or equal to a thickness of the active material layer.

The active material layer may be on opposite surfaces of the substrate, and a height of the corrugated portion may be equal to or less than a total thickness of the substrate and the active material layer.

A height of the corrugated portion may be from 20 µm to 100 µm.

According to another aspect the invention concerns a secondary battery, including an electrode assembly including a first electrode, a separator, and a second electrode, a case accommodating the electrode assembly, and a cap assembly coupled to an opening of the case, the cap assembly sealing the case, wherein at least one of the first electrode and the second electrode includes a substrate including a metal material, an active material layer on a portion of the substrate, resulting in an uncoated portion, an electrode tab at an end of the uncoated portion, and a corrugated portion in the uncoated portion, the corrugated portion being between the active material layer and the electrode tab.

The corrugated portion may face an inner circumferential surface of the case with the separator therebetween.

According to one embodiment, if the first electrode and the second electrode expand due to charging and discharging of the electrode assembly and an external force is applied to the uncoated portion, the corrugated portion may deform to absorb the external force.

The cap assembly may include a cap plate coupled to the opening of the case, the cap plate including a through-hole, a terminal plate on the cap plate, the terminal plate including a protrusion in the through-hole, and an upper insulator between the cap plate and the terminal plate.

The first electrode may include a first substrate including the metal material, a first active material layer on a portion of the first substrate, resulting in a first uncoated portion, and a first electrode tab at an end of the first uncoated portion, the first electrode tab being electrically connected by being coupled to the protrusion of the terminal plate, wherein the corrugated portion in the uncoated portion is between an uncorrugated portion of the uncoated portion on one side of the corrugated portion and another uncorrugated portion of the uncoated portion on a second side of the corrugated portion opposite the one side.

The corrugated portion may have a curved shape, at least a portion of the corrugated portion protruding on at least one of two surfaces of the uncoated portion.

The corrugated portion may have a wave shape in which a U shape is repeated throughout the corrugated portion or a zigzag shape in which a V shape is repeated throughout the corrugated portion.

A height of the corrugated portion is greater than a thickness of the substrate, the height of the corrugated portion being a same thickness as or less than a thickness of the active material layer.

The active material layer may be on opposite surfaces of the substrate, and a height of the corrugated portion may be a same height as or less than a total thickness of the substrate and the active material layer.

A height of the corrugated portion may be from 20 µm to 100 µm.

### BRIEF DESCRIPTION OF DRAWINGS

Features will become apparent to those of ordinary skill in the art by describing in detail exemplary embodiments with reference to the attached drawings, in which:
FIG. 1 illustrates an example of an electrode according to some embodiments of the present invention;
FIG. 2 illustrates an example of a region in the electrode where a crack may occur;
FIG. 3 illustrates an example of a state in which an electrode according to some embodiments of the present invention is accommodated in a case of a secondary battery;
FIG. 4 illustrates an example of a comparative electrode being deformed by an external force while accommodated in the case of a secondary battery;
FIG. 5 illustrates an example of the electrode according to some embodiments of the present invention being deformed by an external force while accommodated in the case of a secondary battery;
FIG. 6 illustrates an example comparing the size of a corrugated portion in the electrode according to some embodiments of the present invention;
FIG. 7 illustrates another example of the corrugated portion in the electrode according to some embodiments of the present invention;
FIG. 8 is a cross-sectional view illustrating an example of a secondary battery according to some embodiments of the present invention;
FIG. 9 is an exploded perspective view illustrating an example of a secondary battery according to some embodiments of the present invention;
FIG. 10 is a cross-sectional view illustrating an example obtained by cutting along the A-A region of FIG. 8; and
FIG. 11 is an enlarged view illustrating an example of the B region in FIG. 10.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

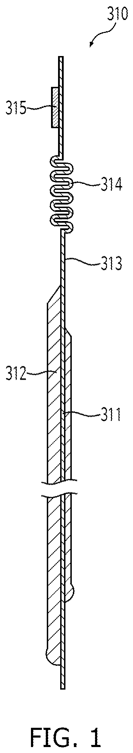

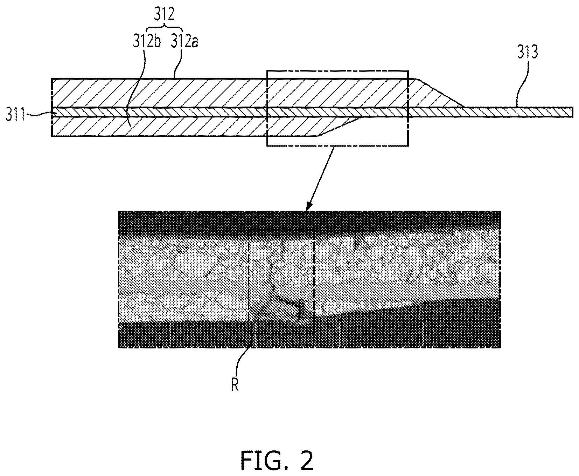

FIG. 1 illustrates an example of an electrode according to some embodiments of the present invention, and FIG. 2 illustrates an example of a region in the electrode where a crack may occur.

Referring to FIGS. 1 and 2, an electrode 310 according to some embodiments of the present invention includes a substrate 311 including a metal material, an active material layer 312 formed on a portion of the substrate 311 so as to form an uncoated portion 313, an electrode tab 315 formed at an end of the uncoated portion 313, and a corrugated portion 314 formed in the uncoated portion 313 between the active material layer 312 and the electrode tab 315.

The substrate 311 is a current collector formed of a metal material, and may be in the form of a thin metal plate or a metal film. In some embodiments, the substrate 311 may be formed of an aluminum foil or a copper foil.

The active material layer 312 may be formed on a portion of the substrate 311 so that the uncoated portion 313 is formed at an end of the substrate 311. The active material layer 312 may be formed on both surfaces of the substrate 311. In some embodiments, a first active material layer 312a may be formed on one surface of the substrate 311, and a second active material layer 312b may be formed on the other (e.g., opposite) surface of the substrate 311. The first active material layer 312a and the second active material layer 312b may be manufactured by applying an electrode mixture including an active material, a binder, a conductive material, etc. on the surface of the substrate 311 and then drying and rolling the mixture.

The electrode mixture forming the first active material layer 312a and the second active material layer 312b may include the same components. In some embodiments, the electrode mixture may include a positive electrode active material, a binder, a conductive material, etc. In some embodiments, the electrode mixture may include a negative electrode active material, a binder, a conductive material, etc.

In some embodiments, a length of the first active material layer 312a may be greater than a length of the second active material layer 312b. The first active material layer 312a may first be formed on one surface of the substrate 311, and then the second active material layer 312b may be formed on the other surface of the substrate 311. In some embodiments, after applying the electrode mixture to one surface of the substrate 311, the electrode mixture may be dried, and then flattened through a rolling process to form the first active material layer 312a. After that, the electrode mixture may be applied to the other surface of the substrate 311, dried, and then flattened through a rolling process to form the second active material layer 312b.

In some embodiments, in the process of forming the second active material layer 312b on the other surface of the substrate 311 by applying and drying the electrode mixture and then rolling it after forming the first active material layer 312a on one surface of the substrate 311, a point R may occur, at which a maximum shear stress is applied to the active material layer 312 near an end of the second active material layer 312b. The point R at which the maximum shear stress is applied may cause damage in the active material layer 312 and may be the point at which fatigue fracture first occurs. That is, during the life cycle of the secondary battery, the electrode repeatedly contracts and expands, and cracks occur at the point R in the active material layer 312, where the maximum shear stress is applied, so that fatigue fracture progresses rapidly and may shorten the lifespan of the secondary battery.

In the electrode 310 according to some embodiments of the present invention, by forming the corrugated portion 314 in the uncoated portion 313 between the active material layer 312 and the electrode tab 315, the external force applied to the uncoated portion 313 while the electrode repeatedly contracts and expands during the life cycle of the secondary battery may be absorbed by the deformation of the corrugated portion 314 (e.g., resulting in the corrugated portion 314 being deformable), thereby removing the tensile load applied to the active material layer 312 and preventing the active material layer 312 from being damaged.

The corrugated portion 314 is formed in the uncoated portion 313 between the active material layer 312 and the electrode tab 315 to absorb a load applied to the uncoated portion 313. In some embodiments, the corrugated portion 314 may be formed by deforming the uncoated portion 313 using an imprint or a roller.

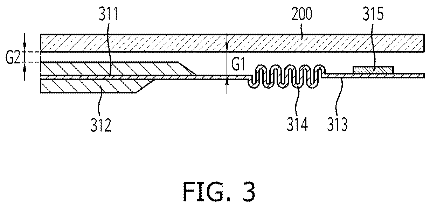

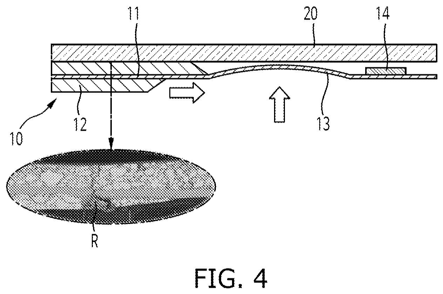

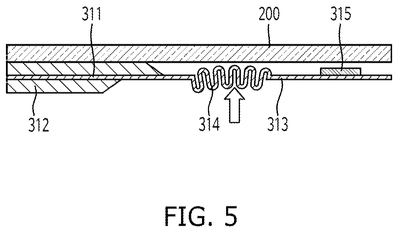

FIG. 3 illustrates an example of a state in which an electrode according to some embodiments of the present invention is accommodated in the case of a secondary battery. FIG. 4 illustrates a comparative example of an electrode being deformed by an external force while accommodated in the case of a secondary battery, and FIG. 5 illustrates an example of the electrode according to some embodiments of the present invention being deformed by an external force while accommodated in the case of a secondary battery.

Referring to FIG. 3, when the electrode is received in the case 200 of the secondary battery in a wound state, a gap G1 between the uncoated portion 313 and the case 200 in the substrate 311 is formed larger than a gap G2 between the active material layer 312 and the case 200. Thus, if the electrode expands, a load may continuously be applied to the uncoated portion 313 on which the active material layer 312 is not formed.

Referring to FIG. 4, in the case of a comparative electrode 10 with no corrugated portion formed, once the electrode expands, the active material layer 12 comes into close contact with the inner circumferential surface of the case 20 so that no additional deformation occurs. In some embodiments, because an uncoated portion 13 of the substrate 11, on which the active material layer 12 is not formed, remains spaced apart from the inner circumferential surface of the case 20, the uncoated portion 13 may continuously receive a load toward the case 20. If the uncoated portion 13 receives a load that deforms it in the direction of the case 20, a tensile load may be applied to the substrate 11 on which the active material layer 12 is formed. Therefore, if the electrode repeatedly contracts and expands during the life cycle of the secondary battery, a repeated load is applied to the substrate 11 on which the active material layer 12 is formed, so that fatigue fracture may proceed rapidly at the point R where the maximum shear stress is applied, thereby shortening the lifespan of the secondary battery.

In comparison, referring to FIG. 5, in the electrode according to some embodiments of the present invention, even if the electrode is expanded during the life cycle of the secondary battery so that the active material layer 312 comes into close contact with the inner circumferential surface of the case 200, and thus a load is applied to the uncoated portion 313 in the direction of the case 200, the corrugated portion 314 may be deformed to absorb the load. Accordingly, it is possible to prevent a tensile load from being applied to the side of the substrate 311 on which the active material layer 312 is formed, thereby preventing damage to the active material layer 312.

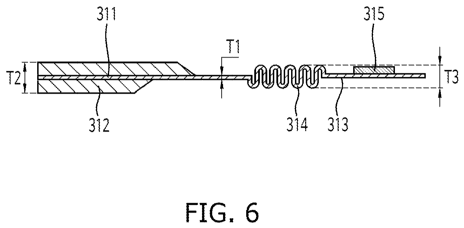

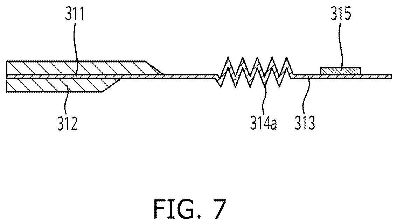

FIG. 6 illustrates an example comparing the size of the corrugated portion in the electrode according to some embodiments of the present invention, and FIG. 7 illustrates another example of the corrugated portion in the electrode according to some embodiments of the present invention.

Referring to FIG. 6, the corrugated portion 314 is formed in a curved shape such that at least a portion thereof protrudes on one or both surfaces of the uncoated portion 313. In some embodiments, the corrugated portion 314 may be in a wave form in which a U shape is continuously repeated (e.g., repeated throughout the corrugated portion). However, as shown in FIG. 7, the corrugated portion 314a is in a zigzag form in which a V shape is continuously repeated (e.g., repeated throughout the corrugated portion). That is, the corrugated portion 314 may be formed in any shape as long as it can absorb an external force applied to the uncoated portion 313.

A height (T3) (e.g., as measured along a direction perpendicular to a longitudinal direction of the substrate 311) of the corrugated portion 314 may be greater than a thickness (T1) (e.g., as measured along a direction perpendicular to a longitudinal direction of the substrate 311) of the substrate 311, and may be the same as or less than a thickness (T2) (e.g., as measured along a direction perpendicular to a longitudinal direction of the substrate 311) of the active material layer 312. The height (T3) of the corrugated portion 314 (e.g., the height (T3) of the corrugated portion 314 is measured as a distance from peak to peak along the same direction) may refer to a distance between edges protruding on one or both surfaces of the substrate 311. When the active material layer 312 is formed on both surfaces of the substrate 311, the height (T3) of the corrugated portion 314 may be the same as or less than the total thickness (T2) of the substrate 311 and the active material layer 312. In some embodiments, the thickness (T1) of the substrate 311 may be 10 µm-15 µm, and the total thickness (T2) of the active material layer 312 may be 100 µm. In that case, the height (T3) of the corrugated portion 314 may be from 20 µm to 100 µm.

If the height (T3) of the corrugated portion 314 is formed smaller than the thickness (T1) of the substrate 311, it cannot absorb an external force, and if the height (T3) of the corrugated portion 314 is formed larger than the thickness (T2) of the active material layer 312, it may press adjacent electrodes and cause damage to other electrodes.

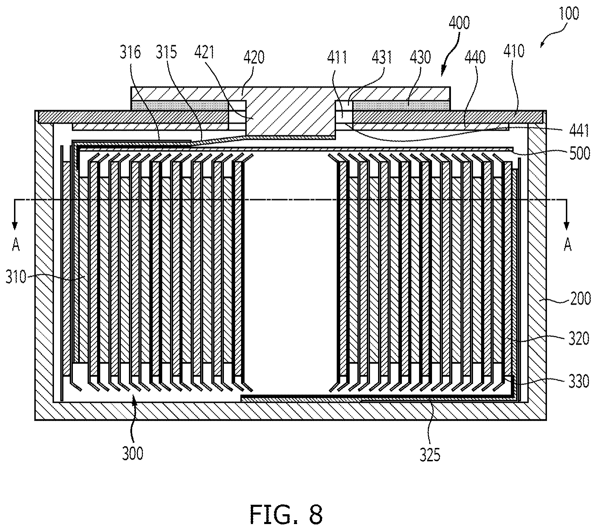

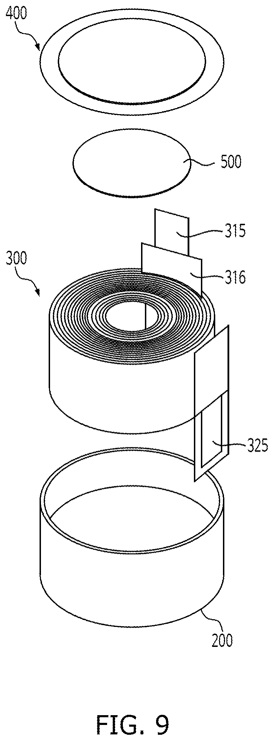

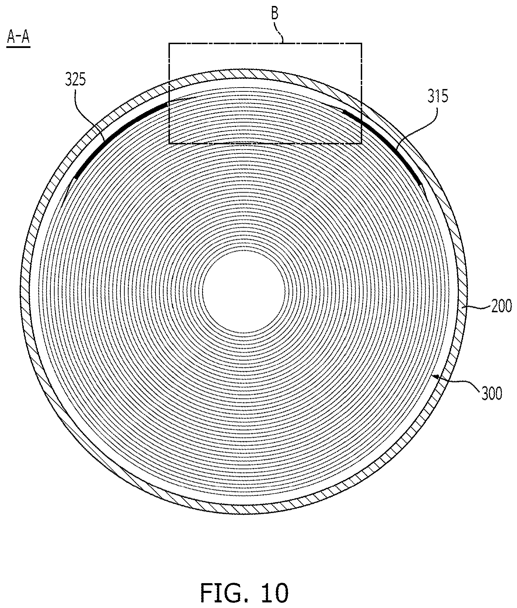

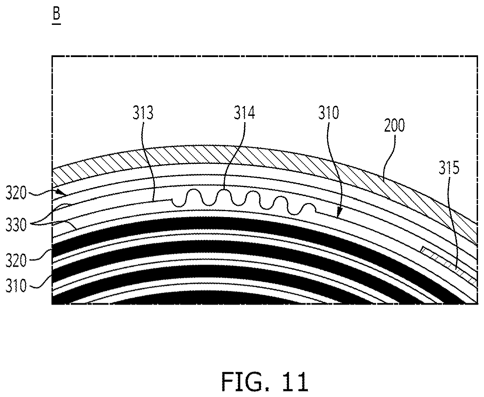

FIG. 8 is a cross-sectional view illustrating an example of a secondary battery according to some embodiments of the present invention, FIG. 9 is an exploded perspective view illustrating an example of the secondary battery according to some embodiments of the present invention, FIG. 10 is a cross-sectional view illustrating an example obtained by cutting along the A-A region of FIG. 8, and FIG. 11 is an enlarged view illustrating an example of the B region in FIG. 10.

Referring to FIGS. 8 to 11, a secondary battery 100 according to some embodiments of the present invention includes an electrode assembly 300 having a first electrode 310, a separator 330, and a second electrode 320, a case 200 accommodating the electrode assembly 300, and a cap assembly 400 coupled to an opening of the case 200 to seal the case 200.

The electrode assembly 300 may include the separator 330 and the first electrode 310 and the second electrode 320 positioned with the separator 330 interposed therebetween and may be wound in a jelly-roll shape.

The first electrode 310 includes a first substrate and a first active material layer on the first substrate. A first electrode tab 315 may extend outwardly from a first uncoated portion of the first substrate where the first active material layer is not located, and the first electrode tab 315 may be electrically connected to the cap assembly 400.

The second electrode 320 includes a second substrate and a second active material layer on the second substrate. A second electrode tab 325 may extend outwardly from a second uncoated portion of the second substrate where the second active material layer is not located, and the second electrode tab 325 may be electrically connected to the case 200. The first electrode tab 315 and the second electrode tab 325 may extend in opposite directions.

The first electrode 310 may act as a positive electrode. In such an embodiment, the first substrate may be made of, for example, an aluminum foil, and the first active material layer may include, for example, a transition metal oxide. The second electrode 320 may act as a negative electrode. In such an embodiment, the second substrate may be made of, for example, a copper foil or a nickel foil, and the second active material layer may include graphite, for example.

The separator 330 prevents a short circuit between the first electrode 310 and the second electrode 320 while allowing movement of lithium ions therebetween. The separator 330 may be made of, for example, a polyethylene film, a polypropylene film, a polyethylene-polypropylene film, or the like.

The case 200 accommodates the electrode assembly 300 and, together with the cap assembly 400, forms the external appearance of the secondary battery. The case 200 may have a substantially cylindrical body portion and a bottom portion connected to one side (e.g., to one end) of the body portion. The case 200 may be made of a metal, such as aluminum, aluminum alloy, or nickel-plated steel.

The second electrode tab 325 may be coupled to a bottom portion of the case 200 to be electrically connected. The first electrode tab 315 may have an end portion coupled to a protrusion 421 of the terminal plate 420. An insulating tape 316 may be attached to a portion of the first electrode tab 315 other than the portion where the first electrode tab 315 is coupled to the protrusion 421 of the terminal plate 420. Because the first electrode tab 315, which is bent to the upper side of the electrode assembly 300, may come into contact with the cap plate 410 of the cap assembly 400 or the inner circumferential surface of the case 200, causing a short circuit, the insulating tape 316 may be attached.

The cap assembly 400 may include a cap plate 410 with a through-hole 411 formed therein, a terminal plate 420 disposed on the cap plate 410 and including a protrusion 421 inserted into the through-hole 411, and an upper insulator 430 disposed between the cap plate 410 and the terminal plate 420.

The cap plate 410 may be formed in a disk shape having a through-hole 411 in its center. The cap plate 410 may be formed to have a larger diameter than the terminal plate 420 and the upper insulator 430. The cap plate 410 may be coupled by welding to an upper end of the case 200 so as to close one opened side of the case 200. The shape of the cap plate 410 may be formed in various shapes corresponding to the shape of the case to which it is coupled.

The terminal plate 420 may be formed in a circular disk shape having a smaller diameter than that of the cap plate 410, and a protrusion 421 may be formed at its center so that it is inserted into the through-hole 411 of the cap plate 410. In a state in which the protrusion 421 of the terminal plate 420 is inserted into the through-hole 411, the protrusion 421 may protrude toward the electrode assembly 300. The protrusion 421 of the terminal plate 420 may be configured for coupling with the first electrode tab 315. The shape of the terminal plate 420 may be formed in various shapes corresponding to the shape of the cap plate 410.

The protrusion 421 of the terminal plate 420 may be coupled to the first electrode tab 315, and the second electrode tab 325 may be coupled to the case 200, so that the terminal plate 420 may function as a positive electrode and the case 200 may function as a negative electrode.

The upper insulator 430 is disposed between the cap plate 410 and the terminal plate 420 so that the cap plate 410 and the terminal plate 420 are electrically insulated. Because the cap plate 410 and the terminal plate 420 are each formed of a conductive metal material and are electrically connected respectively to the second electrode tab 325 (negative electrode) and the first electrode tab 315 (positive electrode), the upper insulator 430 prevents a short circuit by insulating the cap plate 410 from the terminal plate 420. The upper insulator 430 may be formed of a resin such as polypropylene or polyethylene.

The upper insulator 430 may be formed in a disk shape in which an insertion hole 431 is formed at its center, similar to the cap plate 410. In this way, the protrusion 421 of the terminal plate 420 may pass through the insertion hole 431 of the upper insulator 430 and the through-hole 411 of the cap plate 410 to be located inside the case 200. The first electrode tab 315 may be coupled to the protrusion 421 of the terminal plate 420 inside the case 200. The outer diameter of the upper insulator 430 may be the same as or similar to that of the terminal plate 420. The outer diameter of the cap plate 410 may be larger than those of the upper insulator 430 and the terminal plate 420. The diameter of the insertion hole 431 of the upper insulator 430 may be the same as or similar to the diameter of the through-hole 411 of the cap plate 410.

The upper insulator 430 may be joined to the cap plate 410 and the terminal plate 420 by thermal fusion, by placing the upper insulator 430 between the cap plate 410 and the terminal plate 420 and applying heat and pressure to the cap plate 410 and the terminal plate 420.

An insulating sheet 500 may be disposed between the cap assembly 400 and the electrode assembly 300 to insulate an upper portion of the electrode assembly 300 from the first electrode tab 315. The insulating sheet 500 may be disposed over the electrode assembly 300 (e.g., between the electrode assembly 300 and the first electrode tab 315). The diameter of the insulating sheet 500 may be smaller than an outer diameter of the electrode assembly 300. The insulating sheet 500 may be formed of a resin such as polypropylene or polyethylene.

The cap assembly 400 may further include a lower insulator 440 disposed between the cap plate 410 and the first electrode tab 315, so as to insulate the first electrode tab 315 from the cap plate 410.

When the cap plate 410 is connected to the case 200 so as to serve as the same electrode as the case 200 (a negative electrode), the first electrode tab 315 serves as a positive electrode. Therefore, the lower insulator 440 may insulate the cap plate 410 and the first electrode tab 315 to prevent a short circuit. The lower insulator 440 may be formed of a resin such as polypropylene or polyethylene.

The lower insulator 440 may be formed in a disk shape having an insertion hole 441 at its center, similar to the cap plate 410. Through this, the protrusion 421 of the terminal plate 420 may pass through the insertion hole 441 of the lower insulator 440 and the through-hole 411 of the cap plate 410 to be located inside the case 200. The first electrode tab 315 may be coupled to the protrusion 421 of the terminal plate 420. The outer diameter of the lower insulator 440 may be the same as or similar to that of the electrode assembly 300. The outer diameter of the lower insulator 440 may be smaller than that of the cap plate 410. The insertion hole 441 of the lower insulator 440 may be sized such that the cap plate 410 is not exposed on the side of the first electrode tab 315. The diameter of the insertion hole 441 of the lower insulator 440 may be the same as or smaller than the diameter of the through-hole 411 of the cap plate 410.

In some embodiments, the lower insulator 440 may be formed of insulating tape and attached to a bottom surface of the cap plate 410, or formed of an insulating sheet and joined to the bottom surface of the cap plate 410 by thermal fusion.

With reference to FIGS. 8 and 9, the secondary battery 100 described herein may be a coin-type or a button-type battery. However, the secondary battery 100 may also be applied to other types of secondary batteries (for example, cylindrical batteries). Although FIG. 8 shows a structure in which a first electrode tab 315 is protruded upwardly to be connected to the cap assembly 400 and a second electrode tab 325 is protruded downwardly to be connected to the case 200, the first electrode tab and the second electrode tab may protrude upwardly to be connected respectively to the cap assembly and the case.

Between the first electrode 310 and the second electrode 320 of the electrode assembly 300, at least one may include a substrate including a metal material, an active material layer formed on a portion of the substrate so as to form an uncoated portion, an electrode tab formed at an end of the uncoated portion, and a corrugated portion formed in the uncoated portion between the active material layer and the electrode tab.

In some embodiments, the first electrode 310 may serve as a positive electrode, and the second electrode 320 may serve as a negative electrode. Because, during the life cycle of the secondary battery, the positive electrode and the negative electrode repeatedly contract and expand and a fatigue load accumulates, the positive electrode may be damaged earlier than the negative electrode. Therefore, the corrugated portion may be formed in the first electrode 310 serving as the positive electrode.

Referring to FIGS. 1 and 8, the first electrode 310 may include a first substrate 311 including a metal material, a first active material layer 312 formed on a portion of the first substrate 311 so as to form a first uncoated portion 313, a first electrode tab 315 formed at an end of the first uncoated portion 313 and electrically connected by being coupled to the protrusion 421 of the terminal plate 420, and the corrugated portion 314 formed in the first uncoated portion 313 between the first active material layer 312 and the first electrode tab 315. The first electrode 310 may be identical to the electrode 310 described above with reference to FIGS. 1 to 7. In some embodiments, the second electrode 320 may also include a corrugated portion.

Referring to FIG. 11, the corrugated portion 314 may be disposed so as to face the inner circumferential surface of the case 200 with the separator 330 and the second electrode 320 interposed therebetween. In some embodiments, another separator 330 may also be disposed between the second electrode 320 and the inner circumferential surface of the case 200. If the first electrode 310 and the second electrode 320 expand by charging and discharging of the electrode assembly 300 during the life cycle of the secondary battery, and an external force is applied to the first uncoated portion 313, the corrugated portion 314 may be deformed to absorb the external force, thereby removing the tensile load applied to the active material layer and preventing the active material layer from being damaged.

According to some embodiments of the present invention, by forming the corrugated portion on an uncoated portion of the substrate on which no active material layer may be formed, any external force generated during charging and discharging of the secondary battery may be absorbed by the corrugated portion.

Electrodes serving as a positive electrode and a negative electrode are manufactured by forming an active material layer on a substrate. In the manufacturing process of the electrode, a portion having weak strength may form in the active material layer. During the life cycle of the secondary battery, the electrode repeatedly contracts and expands, and a tensile load is repeatedly applied to the active material layer, which may cause cracks in the portion having weak strength in the active material layer. When cracks occur in the active material layer, there may be a problem of shortening the lifespan of the secondary battery.

According to some embodiments of the present invention, by absorbing the external force generated during charging and discharging of the secondary battery at the corrugated portion, the tensile load applied to the active material layer may be removed, thereby preventing damage to the active material layer.

Although the present invention has been described with reference to embodiments and drawings illustrating aspects thereof, the present invention is not limited thereto. Various modifications and variations can be made by a person skilled in the art to which the present invention belongs within the scope of the technical spirit of the present invention and the claims and their equivalents, below.

### DESCRIPTION OF SOME REFERENCE SYMBOLS

100: secondary battery
200: case
300: electrode assembly
310: electrode, first electrode
311: substrate, first substrate
312: active material layer, first active material layer
313: uncoated portion, first uncoated portion
314: corrugated portion
315: electrode tab, first electrode tab
320: second electrode
325: second electrode tab
330: separator
400: cap assembly
500: insulating sheet

## Claims

1. An electrode (310), comprising:
a substrate (311) comprising a metal material;
an active material layer (312) on a first portion of the substrate (311), a second portion of the substrate (311) without the active material being an uncoated portion (313);
an electrode tab (315) at an end of the uncoated portion (313); and
a corrugated portion (314, 314a) in the uncoated portion (313), the corrugated portion (314, 314a) being between the active material layer (312) and the electrode tab (315).

2. The electrode (310) according to claim 1, wherein, if an external force is applied to the uncoated portion (313), the corrugated portion (314, 314a) deforms to absorb the external force.

3. The electrode (310) according to claim 1 or 2, wherein the corrugated portion (314, 314a) includes a deformation of the uncoated portion (313).

4. The electrode (310) according to any of claims 1 to 3, wherein the corrugated portion (314, 314a) has a curved shape, at least a portion of the corrugated portion (314, 314a) protruding on at least one of two surfaces of the uncoated portion (313).

5. The electrode (310) according to claim 4, wherein the corrugated portion (314) has a wave shape in which a U shape is repeated throughout the corrugated portion (314).

6. The electrode (310) according to claim 4 or 5, wherein the corrugated portion (314a) has a zigzag shape in which a V shape is repeated throughout the corrugated portion (314a).

7. The electrode (310) according to any of claims 1 to 6, wherein a height of the corrugated portion (314, 314a) is greater than a thickness of the substrate (311).

8. The electrode (310) according to any of claims 1 to 7, wherein a height of the corrugated portion (314, 314a) is less than or equal to a thickness of the active material layer (312).

9. The electrode (310) according to any of claims 1 to 8, wherein:
the active material layer (312) is on opposite surfaces of the substrate (311), and
a height of the corrugated portion (314, 314a) is equal to or less than a total thickness of the substrate (311) and the active material layer (312).

10. The electrode (310) according to any of claims 1 to 9, wherein a height of the corrugated portion (314, 314a) is from 20 µm to 100 µm.

11. A secondary battery (100), comprising:
an electrode assembly (300) comprising a first electrode (310), a separator (330), and a second electrode (320);
a case (200) accommodating the electrode assembly (300); and
a cap assembly (400) coupled to an opening of the case (200), the cap assembly (400) sealing the case (200),
wherein at least one of the first electrode (310) and the second electrode (320) is an electrode (310) according to any of claims 1 to 10.

12. The secondary battery (100) according to claim 11, wherein the corrugated portion (314, 314a) faces an inner circumferential surface of the case (200) with the separator (330) therebetween.

13. The secondary battery (100) according to claim 11 or 12, wherein, if the first electrode (310) and the second electrode (320) expand due to charging and discharging of the electrode assembly (300) and an external force is applied to the uncoated portion (313), the corrugated portion (314, 314a) deforms to absorb the external force.

14. The secondary battery (100) according to any of claims 11 to 13,
wherein the cap assembly (400) comprises:
a cap plate (410) coupled to the opening of the case (200), the cap plate (410) including a through-hole (411);
a terminal plate (420) on the cap plate (410), the terminal plate (420) including a protrusion (421) in the through-hole (411); and
an upper insulator (430) between the cap plate (410) and the terminal plate (420).

15. The secondary battery (100) according to claim 14, wherein the first electrode (310) comprises:
a first substrate (311) comprising the metal material;
a first active material layer (312) on a first portion of the substrate (311), a second portion of the substrate (311) without the active material being an uncoated portion (313); and
a first electrode tab (315) at an end of the uncoated portion (313), the first electrode tab (315) being electrically connected by being coupled to the protrusion (421) of the terminal plate (420),
wherein the corrugated portion (314, 314a) in the uncoated portion (313), the corrugated portion (314, 314a) being between the first active material layer (312) and the first electrode tab (315).
